# FASCICULE DE BREVET EUROPEEN

(11) **EP 1 649 677 B1**
(45) Date de publication et mention de la délivrance du brevet: **01.10.2008**
(21) Numéro de dépôt: 04767482.5
(22) Date de dépôt: 17.06.2004
(51) Int. Cl.: H04M 7/00, G10L 19/00

(54) **PROCEDES ET DISPOSITIFS D'EVALUATION DE DELAIS DE TRANSMISSION ET DE TRAITEMENT D'UN SIGNAL DE PAROLE RECU DANS UN TERMINAL RELIE A UN RESEAU DE PAQUETS**
VERFAHREN UND EINRICHTUNGEN ZUR AUSWERTUNG VON ÜBERTRAGUNGSZEITEN UND ZUM VERARBEITEN EINES IN EINEM MIT EINEM PAKETNETZ VERBUNDENEN ENDGERÄT EMPFANGENEN VOICE-SIGNALS
METHODS AND DEVICES FOR EVALUATING TRANSMISSION TIMES AND FOR PROCESSING A VOICE SIGNAL RECEIVED IN A TERMINAL CONNECTED TO A PACKET NETWORK

(30) Priorité: 11.07.2003 FR 0350329
(43) Date de publication de la demande: 26.04.2006
(73) Titulaire: FRANCE TELECOM, 75015 Paris (FR)
(72) Inventeur: BARRIAC, Vincent, F-22660 Trelevern (FR); LE SAOUT, Jean-Yves, F-22660 Trelevern (FR); LOSQUIN, Patrick, F-22300 Lannion (FR)
(74) Mandataire: de la Fouchardière, Marie-Noelle
(86) Numéro de dépôt international: PCT/FR2004/001636
(87) Numéro de publication internationale: WO 2005/015889

(56) Documents cités:
- EP-A- 0 741 471
- US-A1- 2002 064 158
- US-A1- 2002 120 458
- SCHEETS G ; SINGH R ; PARPERIS M: "Analyzing end-to-end delivery delay in pure VoIP networks" 45TH MIDWEST SYMPOSIUM ON CIRCUITS AND SYSTEMS. CONFERENCE PROCEEDINGS, vol. 2, 4 août 2002 (2002-08-04), pages 517-520, XP002271354 TULSA, OK, USA ISBN: 0-7803-7523-8
- PSYTECHNICS LTD: "Estimating E-model Id within a VoIP network" TECHNICAL NOTE, 2002, pages 1-4, XP002271355 IPSWICH, UK cité dans la demande
- FR¹D¹RIC LE GARREC: "Deliverable D2.4 The Needs of Consolidation" INFORMATION SOCIETY TECHNOLOGIES, 20 juin 2003 (2003-06-20), XP002271356 INFORMATION SOCIETY TECHNOLOGIES

## Description

La présente invention a trait de manière générale aux réseaux à commutation de paquets, notamment l'Internet, et plus particulièrement à la téléphonie sur réseau IP.

L'invention concerne plus précisément un procédé d'évaluation du délai de traitement d'un signal de parole contenu dans des paquets de données reçus dans un terminal récepteur équipé d'un module de téléphonie, au cours d'une communication vocale établie au travers d'un réseau à commutation de paquets avec un terminal émetteur des paquets de données. L'invention concerne encore un procédé d'évaluation du délai de transmission de bout en bout d'un signal de parole reçu dans un terminal récepteur, ce délai de bout en bout incluant le délai précité de traitement du signal de parole. L'invention concerne aussi des dispositifs aptes à mettre en oeuvre les procédés précités.

Les possibilités accrues de joindre et de communiquer avec n'importe quel interlocuteur en un lieu sensiblement quelconque du globe terrestre, à un instant quelconque et pour un coût dérisoire, celui d'une communication locale, par l'intermédiaire du réseau d'interconnexion mondial de l'Internet, ont suscité un engouement pour la téléphonie sur réseau à commutation de paquets, plus particulièrement pour la téléphonie sur IP (*Internet Protocol*).

Contrairement à la téléphonie classique sur réseau fixe par l'intermédiaire du réseau téléphonique commuté, la communication en téléphonie sur réseau à commutation de paquets, en particulier la téléphonie sur IP, présente le plus souvent une qualité médiocre en l'absence de garantie d'un niveau de qualité minimum.

Cette absence de garantie de qualité vocale en téléphonie sur IP est inhérent à la conception même du réseau, lequel favorise l'interconnexion des interlocuteurs au détriment de la bande passante finalement allouée au signal de parole, seul un critère de meilleur effort (*best effort*) en matière de bande passante allouée étant admissible. En particulier, le débit des informations transmises, sous forme de paquets numériques représentatifs du signal de parole, diminue au fur et à mesure que les usagers du réseau IP se connectent et utilisent le réseau, en téléphonie sur IP ou non.

Le déploiement dans des conditions satisfaisantes des services de téléphonie sur IP nécessite donc la mise en oeuvre d'un contrôle de la qualité des services proposés et en particulier la mise en oeuvre d'outils de mesure de cette qualité.

Pour rappel, les principaux défauts d'une transmission en téléphonie sur IP, encore désignée par "voix sur IP" (*voice over IP* - VoIP), sont les suivants :
- Les retards importants, liés aux délais d'acheminement et aux temps de traitement par les équipements du réseau. Ce défaut peut gêner l'interactivité et donc rendre la conversation entre appelant et appelé difficile, voire impossible.
- La gigue (*jitter* en anglais) dans la durée d'acheminement des paquets, c'est-à-dire la variance statistique du délai de transmission. Ce phénomène se traduit par des intervalles de temps de longueur variable entre les instants d'arrivée des paquets.
- Les pertes de paquets, provoquées soit parce que ces paquets ont été éliminés lors de l'acheminement, leur durée de vie étant épuisée, suite à l'encombrement des routeurs, soit parce qu'ils sont arrivés au terminal distant avec un retard trop important, ces paquets étant alors détruits à l'arrivée.
- L'écho lié principalement aux retards élevés et extrêmement variables.
- La distorsion due au codage du signal de parole en paquets numériques à débit réduit, généralement utilisé en VoIP.

Le délai (ou temps) de transmission de bout en bout du signal de parole représente le cumul de l'ensemble des retards générés dans la chaîne de transmission et de traitement du signal de parole. A ce titre, il constitue le délai réellement perçu par l'usager, il est d'ailleurs parfois désigné par "délai de bouche à oreille".

Le délai de transmission de bout en bout est ainsi composé du délai de transmission sur le réseau de paquets (IP, ATM - *Asynchronous Transfert* Mode), et du temps de traitement et de transmission dans les équipements de terminaison IP (téléphone IP, passerelle, réseau local).

Le délai de transmission sur le réseau en mode paquets prend en compte le temps de traitement au niveau des équipements et en particulier au niveau des routeurs. Ce temps de traitement dépend notamment du nombre d'équipements traversés, des fonctions implémentées sur ces équipements (proxy, transcodage, pare-feu, etc.), de la bande passante disponible.

D'autre part, le temps de traitement dans les équipements et réseaux de terminaison prend en compte les retards introduits par le codec (codeur/décodeur) audio, la mémoire tampon (*buffer*) de gigue, la mise en paquets, la détection d'activité vocale, etc., ainsi qu'une éventuelle transmission sur un réseau de transmission ou d'accès en mode circuit. Le temps de traitement dans les équipements et réseaux de terminaison peut être décomposé en une partie émission et une partie réception.

La mesure du délai de transmission de bout en bout peut être donc très utile dans le cadre de l'évaluation de la qualité des communications vocales sur le réseau de paquets. En effet, la mesure de délai de transmission peut être corrélée avec le niveau de qualité perçue par l'usager. Par conséquent, si l'on connaît les valeurs limites en termes de qualité perçue, du délai de transmission de bout en bout, on pourra agir au niveau de l'ingénierie du réseau ou sur la configuration des équipements d'extrémité pour garder ce temps de transmission dans des limites acceptables.

A titre d'exemple, le document "Analyzing end-to-end delivery delay in pure VoIP networks" de G. Scheets, R. Singh, M. Parperis - 45TH MIDWEST SYMPOSIUM ON CIRCUITS AD SYSTEMS ; CONFERENCE PROCEEDINGS, vol. 2, 4 août 2002 (2002-08-04), pages 517-520, XP002271354 TULSA, OK, USA, ISBN: 0-7803-7523-8 - expose les différentes sources de délais associés à un réseau VoIP pur, et analyse l'incidence des limites du délai de bout en bout sur le nombre d'appels supportés par un réseau VoIP pur.

La mesure du temps de transmission de bout en bout d'un signal de parole est typiquement réalisée de façon intrusive, c'est-à-dire, à l'aide de deux sondes simulant ou se substituant aux terminaux d'extrémité, et établissant entre elles des communications de test.

Selon ce principe, la mesure du temps de transmission proprement dit s'effectue alors par une comparaison entre le signal émis par la sonde émettrice et le signal reçu par la sonde réceptrice. Ceci nécessite impérativement que l'enregistrement des deux signaux soit effectué avec la même base temporelle, et partant que les deux sondes soient synchronisées.

Les signaux de tests utilisés pour ces mesures peuvent être de signaux de parole, des signaux composites ou encore de simples fréquences.

Des sondes du commerce mettant en oeuvre un tel principe de mesure intrusive, sont par exemple celles qui utilisent le modèle psycho-acoustique connu sous l'acronyme PESQ (*Perceptual Evaluation of Speech Quality*) et normalisé dans la recommandation P.862 de l'UIT-T (Union Internationale des Télécommunications).

L'évaluation du temps de transmission de bout en bout par des sondes intrusives présente deux types d'inconvénients. D'une part, les mesures réalisées ne portent pas sur des communications réelles entre usagers, et d'autre part, elles ne prennent pas en compte le traitement du signal de parole effectué dans les terminaux réels des usagers. Par conséquent, ce type d'évaluation peut être utilisé pour caractériser la qualité d'un service de téléphonie d'une manière générale et non pour caractériser la qualité vocale des communications réelles entre deux usagers.

Ainsi, compte tenu du développement croissant de la téléphonie sur IP, il y a un réel besoin de disposer d'outils permettant d'évaluer la qualité vocale effectivement perçue par l'utilisateur d'un terminal de téléphonie de type "voix sur IP", au cours de communications téléphoniques réelles. Corrélativement, il y a également un besoin d'outils permettant d'évaluer de manière non-intrusive le délai réel de traitement d'un signal de parole reçu dans un terminal, et consécutivement le délai de transmission de bout en bout d'un signal de parole au cours de communications réelles entre deux équipements de terminaison IP, tels que des téléphones IP (*IPphone*) ou des PCs équipés de logiciels de téléphonie IP (*softphone*)*.*

La présente invention a pour objectif de répondre à ce besoin. A cet effet, l'invention concerne, selon un premier aspect défini dans la revendication 1, un procédé d'évaluation du délai de traitement d'un signal de parole contenu dans des paquets de données reçus dans un terminal récepteur équipé d'un module de téléphonie apte à reconstituer un signal de parole à partir des paquets de données reçus, au cours d'une communication vocale établie au travers d'un réseau à commutation de paquets avec un terminal émetteur des paquets de données. Ce procédé est remarquable en ce qu'il comporte les étapes suivantes :
- obtention d'un flux de paquets audio à partir des paquets de données reçus, puis décodage dudit flux de paquets audio, selon un temps de décodage prédéterminé, pour reconstituer un premier signal de parole ;
- duplication d'au moins une partie du signal de parole reconstitué par le module de téléphonie, le signal de parole dupliqué constituant un second signal de parole ;
- détermination du décalage temporel existant entre les premier et second signaux de parole ;
- calcul du délai "D3" de traitement du signal de parole dans le terminal récepteur, à partir d'au moins le décalage temporel mesuré entre les premier et second signaux de parole, et le temps de décodage prédéterminé.

Grâce à ce procédé, on dispose d'un outil permettant d'évaluer de manière non-intrusive, c'est-à-dire au cours de communications réelles, le délai de traitement d'un signal de parole dans un terminal récepteur relié à un réseau de paquets. Cet outil pourra donc permettre de contribuer à évaluer la qualité vocale réellement perçue par un utilisateur d'un terminal de téléphonie.

Selon une caractéristique particulière de l'invention, le décalage temporel existant entre le premier et le second signal de parole est mesuré selon une méthode utilisant une fonction d'intercorrélation des signaux d'enveloppe desdits premier et second signaux.

Selon un second aspect défini dans la revendication 7, l'invention concerne un procédé d'évaluation du délai de transmission de bout en bout d'un signal de parole reçu dans un terminal récepteur, au cours d'une communication vocale établie au travers d'un réseau à commutation de paquets avec un terminal émetteur du signal de parole. Ce procédé est remarquable en ce qu'il comporte une étape d'évaluation du délai de traitement du signal de parole dans le terminal récepteur, selon un procédé d'évaluation tel que brièvement exposé plus haut.

Selon une caractéristique particulière de l'invention, ce procédé d'évaluation du délai de transmission d'un signal de parole, comprend en outre les étapes suivantes :
- évaluation du délai "D1" de traitement à l'émission du signal de parole ;
- mesure du délai "D2" de transmission du signal de parole dans le réseau ;
- évaluation du délai de transmission de bout en bout à partir du délai "D1" de traitement à l'émission, du délai "D2" de transmission, et du délai "D3" de traitement à la réception.

Un tel procédé d'évaluation du délai de transmission de bout en bout, en particulier parce qu'il est non intrusif, est un outil efficace d'évaluation de la qualité vocale perçue par l'utilisateur d'un terminal de téléphonie au cours de communications réelles.

Corrélativement comme défini dans les revendications 14 et 16, l'invention concerne un dispositif à installer dans un terminal de communication vocale sur réseau de paquets, comportant des moyens pour mettre en oeuvre le ou les procédés selon l'invention tels qu'exposés succinctement supra.

Selon un mode de réalisation préféré de l'invention, un tel dispositif est implémenté sous la forme de modules programmes comme défini dans les revendications 19 et 20 exécutés sur un système informatique constituant ou incorporé dans un équipement terminal de communication vocale sur réseau de paquets. Par conséquent, la présente invention vise aussi un programme d'ordinateur, éventuellement stocké sur un support d'informations, ce programme étant apte à mettre en oeuvre le ou les procédés précités lorsqu'il est chargé puis exécuté sur un système informatique.

Les avantages de ce dispositif et de ce programme d'ordinateur sont identiques à ceux des procédés conformes à l'invention, tels que succinctement exposés supra.

D'autres particularités et avantages de l'invention apparaîtront encore à la lecture de la description ci-après de l'invention, faite à l'appui des dessins annexés, sur lesquels :
- la figure 1 représente schématiquement un exemple de réseau à commutation de paquets auquel peut s'appliquer la présente invention ;
- la figure 2 est un diagramme schématique d'un terminal de téléphonie IP comprenant, conformément à l'invention, des moyens pour évaluer le délai de traitement d'un signal de parole reçu dans le terminal, et des moyens pour évaluer le délai de transmission de bout en bout du signal de parole ; et
- la figure 3 est un organigramme illustrant un procédé d'évaluation du délai de transmission de bout en bout d'un signal de parole, selon l'invention.

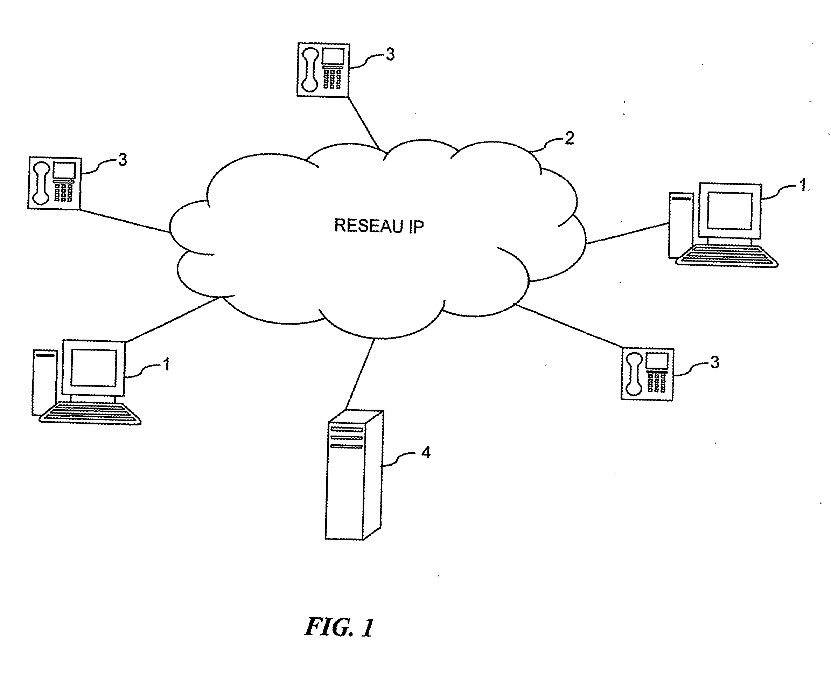

La **figure 1** représente un réseau à commutation de paquets 2 fonctionnant selon une pile de protocoles basée sur le protocole IP (*Internet Protocol*), couramment désigné par "réseau IP". L'invention s'applique cependant à tout réseau de commutation de paquets basé sur un protocole de type IP.

Au réseau 2 sont reliés des équipements d'extrémité IP : 1, 3, 4, parmi lesquels, certains sont aptes à établir des communications vocales sur IP (VoIP) et sont communément désignés par "terminaux IP", tels que des téléphones IP 3, ou des ordinateurs personnels multimédias (PC) 1 équipés d'un logiciel de téléphonie adapté, tandis que d'autres équipements, comme le serveur 4 sont destinés à fournir sur le réseau des services particuliers.

De manière à simplifier l'exposé de l'invention, on a représenté à la figure 1 un seul réseau (2), cependant le réseau 2 peut englober un certain nombre de sous-réseaux associés à des équipements de type passerelle et/ou routeurs permettant d'interconnecter ces sous-réseaux et de rendre possible ainsi une communication IP de bout en bout entre les terminaux IP.

Parmi ces sous-réseaux, on peut trouver typiquement un réseau commuté (RTC), ainsi que des réseaux locaux (par ex. Ethernet).

Selon un mode de réalisation préféré, les terminaux IP 1, 3 communiquent entre eux en utilisant l'ensemble des protocoles de communication définis selon la recommandation H.323 de l'UIT-T (Union Internationale des Télécommunications). Pour obtenir plus d'informations sur cet ensemble de protocoles, on pourra consulter le site Web suivant : *www.itu.org*.

Selon un autre mode de réalisation, les terminaux IP 1, 3 communiquent entre eux en utilisant l'architecture de protocoles SIP (*Session Initiation Protocol*) proposée par l'IETF (*Internet Engineering Task Force*). On pourra obtenir plus d'informations sur cette architecture en consultant le site Web : *www.ietf.org*.

Bien entendu, l'invention n'est nullement limitée à ces deux familles de protocoles, mais s'applique au contraire à toute architecture protocolaire supportant la voix sur IP.

Le serveur 4 est ici un serveur de collecte chargé de récupérer, comme exposé plus bas dans la description, des informations de qualité relatives aux communications vocales établies dans les terminaux IP (1, 3). En particulier, ces informations incluent des valeurs de délais de transmission de bout en bout obtenues conformément à l'invention.

Chaque terminal IP 1, 3, est équipé à cet effet d'un dispositif selon l'invention permettant d'évaluer le délai de transmission de bout en bout d'un signal de parole reconstitué dans le terminal à partir des paquets de données IP reçus au cours d'une communication.

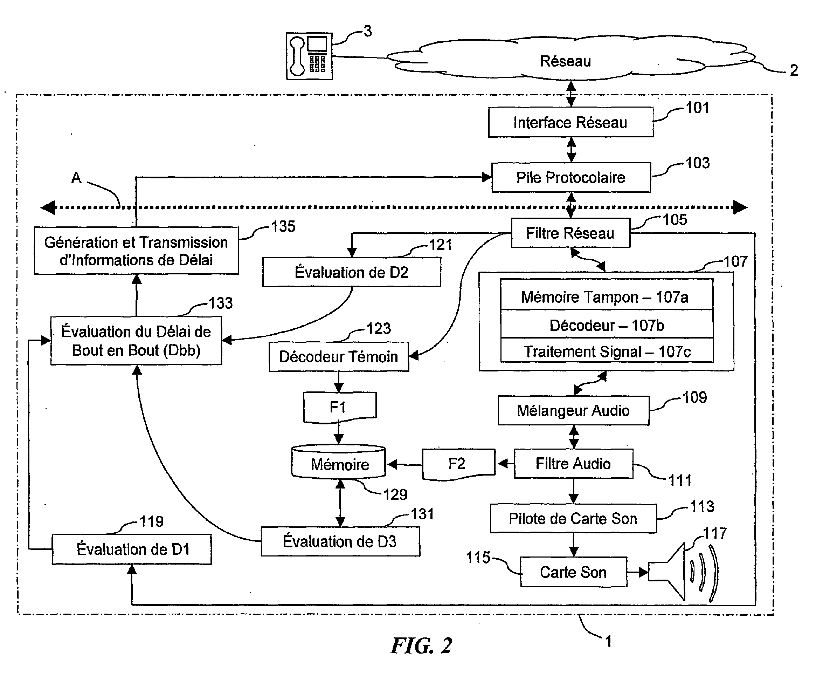

La **figure 2** représente schématiquement un terminal de téléphonie IP comprenant conformément à l'invention, des moyens pour évaluer le délai de traitement d'un signal de parole reçu dans le terminal, et des moyens pour évaluer le délai de transmission de bout en bout du signal de parole.

Ces moyens constituant un dispositif selon l'invention sont incorporés dans un terminal de téléphonie sur IP. Dans cet exemple d'implémentation, le terminal IP considéré est un ordinateur personnel (PC, 1) de type multimédia équipé d'une application de téléphonie.

Le terminal 1 équipé conformément à l'invention, comporte un ensemble de modules 101-135 essentiellement de nature logicielle. Parmi ces modules, un certain nombre est incorporé de manière classique dans le terminal, il s'agit des modules suivants :
- une interface réseau 101 ;
- un gestionnaire de protocoles 103, désignée aussi par "pile protocolaire" ;
- une application de téléphonie 107 ;
- un mélangeur audio 109 ;
- un pilote de carte son 113 ;
- une carte son 115 ;
- au moins un haut-parleur 117 ;
- une interface de programmation A de type API *(Application Programming Interface*)*.*

Les autres modules, spécifiques à la présente invention, sont les suivants :
- un module 105 de filtrage réseau ;
- un module 111 de filtrage audio ;
- un module de décodage audio "témoin" 123 ;
- des moyens de mémorisation 129 ;
- un module 119 d'évaluation de délai de traitement à l'émission (D1) du signal de parole reçu dans le terminal 1 ;
- un module 121 d'évaluation de délai de transmission réseau (D2) d'un signal de parole reçu dans le terminal 1 ;
- un module 131 d'évaluation de délai de traitement à la réception (D3) du signal de parole ;
- un module 133 d'évaluation du délai de transmission de bout en bout à partir des délais D1, D2, et D3 précités ; et
- un module 135 de génération et de transmission d'informations de délai à un serveur de collecte sur le réseau.

L'interface réseau 101 inclut traditionnellement une carte réseau et les éléments nécessaires pour permettre au terminal 1 considéré de se connecter au réseau 2 et de recevoir les signaux électriques acheminant les informations codées. Ces éléments incluent en particulier un modem (modulateur/démodulateur).

L'interface réseau délivre en sortie un flux de paquets IP contenant notamment des trames de voix numérisée.

Les paquets IP sont ensuite pris en charge par le gestionnaire de protocoles 103. Ils subissent alors un traitement de désencapsulation protocolaire selon l'ensemble de protocoles de communication (pile de protocoles) utilisé au-dessus du protocole IP.

Typiquement, ce processus de désencapsulation protocolaire permet d'obtenir :
- des messages de signalisation d'appel,
- des messages de négociation d'appel,
- un flux de paquets de données audio, et
- un flux de paquets de données de contrôle de communication.

Dans un mode de réalisation préféré dans lequel on utilise l'ensemble de protocoles H.323, les messages de signalisation d'appel sont des messages selon le protocole de signalisation d'appel H.225.0, les messages de négociation d'appel sont des messages selon le protocole de négociation H.245, le flux de paquets audio est constitué d'un flux de paquets selon le protocole RTP (*Real Time Protocol*) contenant des trames de signal audio numérisé, et le flux de paquets de données de contrôle de communication est constitué d'un flux de paquets selon le protocole de contrôle RTCP (*Real Time Control Protocol*). Les deux protocoles, RTP et RTCP, sont eux-mêmes placés au dessus du protocole UDP (*User Datagram Protocol*).

Dans un autre mode préféré de réalisation dans lequel on utilise l'ensemble de protocoles de l'architecture SIP (*Session Initiation Protocol*), les messages de signalisation d'appel et les messages de négociation d'appel sont contenus dans des messages selon le protocole SIP, le flux de paquets audio est constitué d'un flux de paquets selon le protocole RTP contenant des trames de signal audio numérisé, et le flux de paquets de données de contrôle de communication est constitué d'un flux de paquets selon le protocole RTCP.

Selon une implémentation particulière, le système d'exploitation du PC (1) est Windows^{™} commercialisé par la société Microsoft, et le gestionnaire de protocoles 103 est constitué de la bibliothèque de fonctions Winsock. L'ensemble de fonctions standardisées fournies par la bibliothèque Winsock permet ainsi de faire tourner sous Windows des applications qui fonctionnent avec les protocoles TCP/UDP-IP, indépendamment du matériel utilisé.

En sortie de la pile protocolaire 103, les différents flux de messages et de paquets de données, c'est-à-dire, les messages de signalisation d'appel, les messages de négociation d'appel, le flux de paquets de données audio, et le flux de paquets de données de contrôle de communication, sont délivrés au module de filtrage réseau 105 (décrit plus bas).

L'interface de type API (référencée par A à la figure 2), est fournie par le système d'exploitation du terminal 1, et permet aux applications informatiques conçues pour accéder au réseau, d'y accéder via le gestionnaire de protocoles 103, en utilisant une bibliothèque de fonctions ou primitives standardisées. Ces primitives permettent ainsi aux applications d'accéder aux protocoles de communication implantés dans le terminal, et de recevoir et envoyer des données.

Comme mentionné plus haut, en prenant le cas d'une implémentation selon les protocoles H.323, on obtient en sortie du gestionnaire de protocoles 103 les flux de données suivants :
- un flux de messages de signalisation d'appel selon le protocole H.225.0 ;
- un flux de messages de négociation d'appel selon le protocole de négociation H.245 ;
- un flux de paquets de données selon le protocole UDP, les paquets UDP incluant des paquets de données audio selon le protocole RTP et des paquets de données de contrôle de communication selon le protocole RTCP.

Ces flux d'informations sont typiquement délivrés en entrée à l'application de téléphonie 107. Dans le cadre du mode de réalisation décrit ici, l'application de téléphonie utilisée est le logiciel NetMeeting^{™} commercialisé par la société Microsoft.

Conformément à la présente invention, le dispositif selon l'invention comporte un module 105 de filtrage réseau, intercalé entre le module de gestion protocolaire 103 et le module de téléphonie 107.

Le module 105 est transparent vis-à-vis des flux de données sortant du gestionnaire de protocoles (il ne les modifie pas). Il comporte des moyens logiciels, c'est-à-dire des fonctions programmées particulières, pour détecter l'établissement d'une communication vocale et identifier la communication.

A la figure 2, une communication vocale est établie entre le téléphone IP 3 et le PC 1. En pratique, l'établissement d'une communication vocale est détecté par le filtre réseau 105, lors de la réception d'un message de signalisation d'appel caractéristique de l'établissement d'une connexion selon le protocole de signalisation d'appel utilisé.

Conformément à l'invention, le filtre réseau 105 comprend des moyens pour obtenir à partir des paquets UDP fournis par la pile protocolaire 103, le flux de paquets audio selon le protocole RTP contenant le signal de parole transmis par le terminal émetteur. En pratique, le filtre réseau extrait du flux de paquets UDP, le flux de paquets RTP, le duplique puis le fournit en entrée au module de décodage témoin 123.

Selon un exemple de réalisation, le filtre réseau 105 est implémenté sous la forme d'une bibliothèque de liens dynamiques (DLL - *data link library*). Cette DLL est chargée automatiquement lors de l'appel de l'interface API de Winsock par une application.

Cette bibliothèque communique avec le gestionnaire de protocoles Winsock par l'intermédiaire d'interfaces particulières, fournies par Winsock : l'interface API et une autre interface connue sous l'acronyme SPI. L'interface SPI (*Service Provider Interface)* permet d'implémenter chacune des différentes fonctions composant le filtre réseau sous la forme d'une LSP (*Layered Service Provider*).

Une instanciation du filtre réseau est créée lorsque le module de téléphonie (107) demande la création d'un canal de communication réseau (*socket*). Plus précisément, l'instanciation d'un filtre réseau est faite lors de l'appel des fonctions 'WSPSocket' et 'WSPAccept' de l'interface API de Winsock par l'application de téléphonie.

Le filtre réseau selon l'invention est conçu de manière à être compatible avec une pluralité de protocoles de communication. A cet effet, il est conçu comme un filtre générique qui se décline en filtres spécifiques (protocolaires). Ces filtres spécifiques sont adaptés à traiter les données transmises selon des protocoles différents de même niveau ou bien selon les protocoles d'une famille particulière de protocoles (SIP, H.323).

Le décodeur témoin 123 est un décodeur audio, par exemple de type G.711, identique à celui mis en oeuvre dans le module de téléphonie 107. De cette façon, le temps de traitement, noté "Tdéc", du décodeur témoin est le même que celui utilisé dans le module de téléphonie. Cependant, on peut utiliser également un décodeur témoin différent de celui du module de téléphonie, à la condition que la différence de durée de traitement entre les deux décodeurs soit constante et connue.

Le décodeur témoin 123 a pour fonction de décoder, selon un temps de décodage prédéterminé car connu à l'avance, le flux de paquets audio RTP fourni par le filtre réseau 105. En sortie du module de décodage témoin, on obtient donc un signal de parole reconstitué, typiquement sous forme d'échantillons au format PCM (*Pulse Code Modulation*).

Le signal de parole reconstitué est alors sauvegardé sous la forme d'un fichier informatique F1 dans la mémoire 129. Cette mémoire peut être constituée, par exemple, par une portion de l'espace mémoire d'un disque dur, ou bien par une zone particulière d'une mémoire vive (RAM).

De retour à la figure 2, les flux de données qui sortent du gestionnaire de protocoles 103 (Winsock) sont fournis au travers du filtre réseau 105 qui ne modifie pas ces données, au module de téléphonie (NetMeeting) 107.

Le module de téléphonie 107 inclut de manière classique, outre le décodeur audio 107b, une mémoire tampon de gigue 107a, et un bloc 107c de traitement de signal assurant des traitements tels que par exemple, la génération de bruits de confort, l'annulation d'écho, l'ajustement de niveaux, etc.

En fonctionnement, le module de téléphonie 107 extrait du flux de paquets UDP qu'il reçoit, les paquets selon le protocole RTP et en extrait les trames de signal audio numérisé et encodé. Grâce au décodeur audio 107b, le signal audio est alors reconstitué, puis sous l'action du bloc de traitement du signal 107c, un certain nombre de traitements est effectué sur celui-ci (traitement de la gigue, de l'écho, etc.).

Le module de téléphonie délivre en sortie un signal audio reconstitué, typiquement sous forme d'échantillons au format PCM (*Pulse Code Modulation*).

Les échantillons de voix codée PCM sont alors délivrés au mélangeur audio 109 qui applique sur le signal de parole des réglages prédéfinis en vue de sa restitution acoustique, de telle sorte que le signal de parole sortant du mélangeur audio est le signal audio final qui sera traduit de façon sonore, et donc entendu par l'utilisateur du terminal 1.

On notera ici que le délai introduit par le mélangeur audio est négligeable vis-à-vis du délai de traitement global du signal dé parole dans le terminal récepteur 1.

Le signal audio reconstitué par le module de téléphonie 107 est fourni en entrée, via le mélangeur audio, au module 111 de filtrage audio selon l'invention. Ce dernier prélève le signal audio reconstitué par le module de téléphonie et l'enregistre dans un second fichier informatique F2 stocké dans la mémoire 129.

Le filtre audio 111 est activé de manière synchrone avec le filtre réseau 105, de telle sorte que les enregistrements du fichier F1 en sortie du décodeur témoin 123, et du fichier F2 en sortie du filtre audio 109, sont effectués simultanément ou à des instants distincts mais dont l'écart est parfaitement connu, ces instants étant déterminés par une même horloge temporelle.

De même que le filtre réseau, le filtre audio 111 ne modifie pas le signal audio qu'il reçoit, de concert avec le filtre réseau il prélève, c'est-à-dire recopie, une partie au moins du signal de parole reconstitué (flux d'échantillons PCM), juste avant sa délivrance à la carte son 115 via le pilote de carte son 113. Le signal de parole reconstitué est finalement converti par un convertisseur numérique-analogique présent dans la carte son, en un signal électrique transformé en ondes acoustiques par le haut-parleur 117.

En pratique, pour l'implémentation du filtre audio 111, on utilise l'architecture connue sous le nom "Windows Driver Model" (WDM). Cette architecture permet de réaliser un interfaçage avec des pilotes de périphérique (*device driver*) appartenant à une même classe, représentative d'un même type de périphérique. On peut alors filtrer des données à destination d'un périphérique particulier de cette classe. En utilisant cette architecture, le filtre audio est implémenté par l'installation d'un pilote de périphérique, de classe MEDIA, qui est automatiquement chargé lors du démarrage du système d'exploitation Windows.

De retour à la figure 2, conformément à l'invention, le terminal récepteur 1 comprend un module 131 d'évaluation du délai de traitement du signal de parole reçu. Celui-ci reçoit en entrée, à partir de la mémoire 129, d'une part le signal de parole F1 décodé par le module 123 de décodage témoin, et d'autre part le signal de parole F2 décodé par le module 107 de téléphonie. Dans le cadre de l'exposé de l'invention, le délai de traitement du signal de parole reçu dans le terminal (1) est désigné par "délai D3".

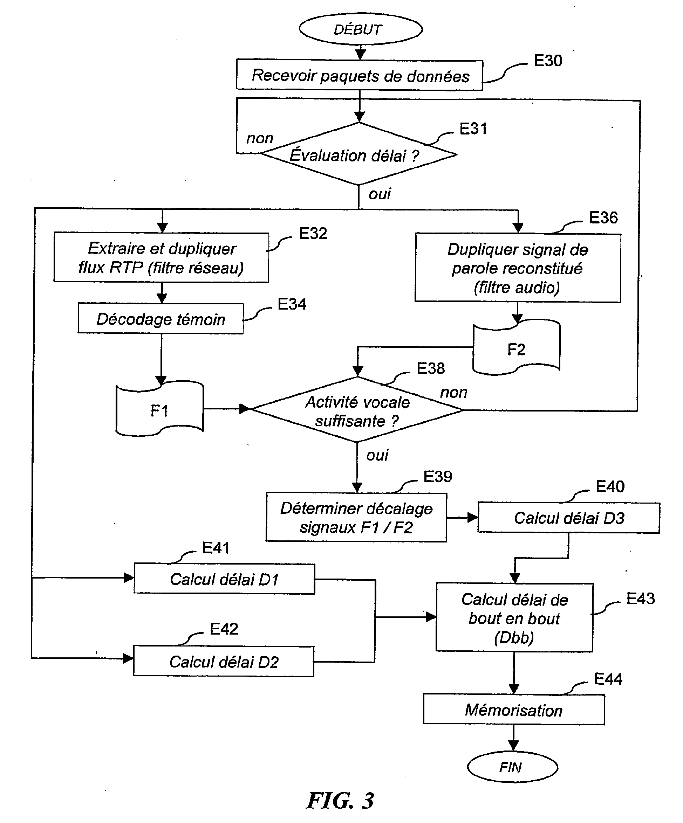

Selon l'invention, le module 131 d'évaluation du délai D3 comprend un certain nombre de sous-modules. Le module 131 comprend en effet, un sous-module de détection d'activité vocale (DAV), non représenté à la figure 2, destiné à mesurer le taux d'activité vocale dans chacun des signaux vocaux enregistrés F1 et F2. Les algorithmes de détection d'activité vocale sont bien connus de l'état de la technique. Comme cela sera exposé plus bas en relation avec la figure 3, la suite du processus d'évaluation du délai de traitement D3, sera mis en oeuvre si l'activité vocale détectée dans les premier et second signaux de parole F1 et F2, est supérieure à un seuil prédéterminé.

Le module 131 d'évaluation du délai D3, comprend d'autre part un sous-module (non représenté) de détermination du décalage temporel existant entre les deux signaux de parole F1 et F2. Conformément à l'invention, le décalage temporel déterminé entre les signaux F1 et F2, prend en compte la différence de durée du traitement opéré sur le flux de paquets RTP en sortie du filtre réseau 105, par, d'une part, le module 107 de téléphonie, et d'autre part, par le module 123 de décodage témoin.

Puisque les temps de traitement du décodeur témoin 123 et du décodeur 107b sont identiques ou très proches, le décalage temporel mesuré représente le délai cumulé introduit par la mémoire tampon 107a et le bloc 107c de traitement de signal, ce délai étant par nature variable et donc difficilement mesurable de manière directe.

Le module 131 comprend enfin un sous-module (non représenté) chargé de calculer le délai D3 de traitement global du signal de parole reçu (sous forme de flux RTP) dans le terminal de communication 1. Comme cela sera exposé plus bas en liaison avec la figure 3, le délai D3 est évalué en prenant en compte la valeur du décalage temporel mesuré entre les signaux F1 et F2.

Le terminal 1 de communication selon l'invention comprend en outre un module 121 d'évaluation du délai "D2" de transmission dans le réseau (2) du signal de parole reçu dans le terminal 1. Le mode d'évaluation du délai D2 selon l'invention sera détaillé plus loin en liaison avec la figure 3.

Le terminal 1 comprend d'autre part un module 119 d'évaluation de délai "D1" de traitement introduit lors de l'émission par le terminal émetteur du signal de parole reçu dans le terminal 1. En pratique, le délai D1 correspond au temps de codage, dans le terminal émetteur, du signal de parole. Le mode d'évaluation du délai D1 selon l'invention sera également détaillé plus loin en liaison avec la figure 3.

Les délais précités D1, D2, D3 évalués selon l'invention sont fournis au module 133 d'évaluation du délai de transmission de bout en bout du signal de parole reçu dans le terminal 1. Selon l'invention, le délai de bout en bout, "Dbb", est calculé par le module 133 à partir du délai D1 de traitement à l'émission, du délai D2 de transmission, et du délai D3 de traitement à la réception. Le calcul du délai Dbb sera détaillé plus bas en liaison avec la figure 3.

Enfin, le terminal 1 selon l'invention, comprend un module 135 de génération et de transmission d'informations de délai. Le module 135 récupère chacune des valeurs de délai de bout en bout obtenues par le module 133, et génère des informations représentatives des valeurs de délai de bout en bout obtenues. Ces informations sont regroupées par exemple sous la forme de "tickets de qualité de transmission" correspondant chacun à une ou plusieurs communications vocales établies dans le terminal de communication 1 considéré.

Ces tickets de qualité de transmission sont alors transmis à un serveur (4) de collecte sur le réseau, destiné à assurer la gestion des informations de délai de bout en bout envoyées par un ensemble de terminaux de communication reliés au réseau.

La transmission des tickets de qualité sur le réseau s'effectue au travers du gestionnaire de protocoles 103 et de l'interface réseau 101. Selon un mode de réalisation préféré, chaque ticket de qualité est incorporé dans un message transmis selon le protocole TCP au travers du réseau IP 2.

Le serveur de collecte 4 est destiné à assurer le traitement des tickets de qualité envoyés par un ensemble (1, 3) de terminaux de communication reliés au réseau, afin d'évaluer la qualité de transmission des signaux de parole reçus dans l'ensemble de ces terminaux. Le serveur de collecte reçoit ainsi de la part de l'ensemble des terminaux de communication équipés d'un dispositif selon l'invention, pour chaque terminal, périodiquement ou après chaque communication vocale, les tickets de qualité générés.

Selon un exemple d'implémentation, à partir des tickets reçus le serveur de collecte génère, dans un rapport de mesure de qualité de transmission, une ligne de texte pour chaque ticket reçu. Ce rapport est stocké en mémoire dans le serveur. Les informations consignées dans ce rapport de qualité sont ensuite visualisables au travers d'une interface homme-machine (IHM) adaptée, par un opérateur humain. Cette interface homme-machine peut être par exemple une interface graphique affichée sur un écran d'ordinateur. Ces informations visualisées pourront alors être utilisées pour superviser la qualité de service relative à la voix sur IP, offerte sur le réseau.

En relation avec la **figure 3****,** on va à présent décrire le procédé, selon l'invention, d'évaluation du délai de transmission de bout en bout d'un signal de parole, ce procédé incluant le procédé selon l'invention d'évaluation du délai de traitement d'un signal de parole reçu dans un terminal de communication.

A la figure 3, a l'étape E30, les paquets de données (paquets UDP) contenant le signal de parole est fourni par la pile protocolaire 103 au filtre réseau 105. Ce dernier met en oeuvre un temporisateur (*timer* en anglais) déterminant les instants requis pour évaluer le délai de transmission de bout en bout.

Le temporisateur précité a donc pour objectif de cadencer les évaluations du délai. Selon un exemple d'implémentation, la cadence d'évaluation est fixée à une évaluation toutes les 15 secondes. Selon un autre exemple de réalisation, l'évaluation peut être effectuée sous la forme d'une "rafale" de mesures, de manière à obtenir une valeur moyenne, à un instant donné, de ces mesures de délai.

Lorsqu'une évaluation du délai doit avoir lieu (E31, oui), à l'étape E32, le filtre réseau 105 extrait du flux UDP, les paquets RTP contenant les trames de parole, et recopie ce flux de paquets.

A l'étape E34, le flux de paquets RTP dupliqué par le filtre réseau est fourni au module 123 de décodage témoin qui reconstitue un signal de parole à partir de ces paquets audio. Le signal de parole reconstitué est ensuite sauvegardé dans le fichier F1.

En parallèle, a l'étape E36, le filtre audio 111 duplique le signal de parole reconstitué par le module 107 de téléphonie, et le sauvegarde dans le fichier F2.

L'enregistrement du signal audio issu du décodeur témoin (123) et du signal audio issu du filtre audio (111) dans respectivement le fichier F1 et le fichier F2 est effectué de préférence au même instant.

On notera ici que, pour simplifier l'exposé, les signaux audio précités sont désignés par les noms des fichiers qui les contiennent, c'est-à-dire F1 et F2.

Dans le mode de réalisation décrit ici, l'extraction des données audio effectuée par le filtre réseau et le filtré audio est arrêtée au bout d'une durée prédéterminée, égale à 5 secondes selon une implémentation choisie.

A l'étape E38, le module 131 d'évaluation du délai de traitement "D3" applique un processus de mesure du taux d'activité vocale dans les signaux de parole F1 et F2, puis compare le taux mesuré à un seuil prédéterminé. En pratique, ce seuil du taux d'activité vocale est fixé à 30%. A l'étape E39, on détermine le décalage entre les deux signaux de parole F1 et F2 seulement si le taux d'activité vocale mesuré dans les deux signaux F1 et F2, est supérieur au seuil prédéterminé.

Par conséquent, dans l'exemple d'implémentation décrit ici, on détermine (E39) le décalage entre les deux signaux de parole F1 et F2 prélevés, chacun de durée égale à 5 secondes, si le taux de parole dans ces signaux est supérieur à 30 % (E38, oui). Dans le cas contraire (E38, non), on retourne à l'étape E31. Ce critère d'activité vocale permet de vérifier que les deux signaux contiennent suffisamment de parole pour rendre possible une mesure de décalage temporel entre ces deux signaux.

A l'étape E39, le module 131 d'évaluation de délai, effectue le calcul du décalage temporel existant entre les deux signaux de parole F1 et F2.

Selon un mode de réalisation préféré, le décalage temporel entre les signaux F1 et F2 est mesuré selon un procédé utilisant une fonction d'intercorrélation des signaux d'enveloppe du signal F1 et du signal F2.

Pour mesurer le décalage temporel entre les signaux F1 et F2, on pourra utiliser par exemple la méthode décrite dans le brevet français publié sous le n° 2 733 867 intitulé "*Procédé et dispositif de mesure sans intrusion de la qualité de transmission d'une ligne téléphonique*". La méthode décrite dans ce document y est exposée en particulier en référence à la figure 1a, et appliquée à un signal de parole et au signal d'écho correspondant. Dans le cadre de la présente invention, la méthode de mesure décrite dans le document précité, est appliquée aux signaux de parole F1 et F2.

Ainsi en reprenant la méthode décrite dans le document précité, les échantillons du signal de parole F1 issu du décodeur témoin sont filtrés au moyen d'un filtre passe-bas sur une durée déterminée et les échantillons du signal F2 issu du filtre audio sont également filtrés sur une durée sensiblement égale à la moitié de cette durée déterminée mais décalée de la moitié de celle-ci, ce qui permet d'obtenir des signaux d'enveloppe du signal F1 et du signal F2. Une pluralité de coefficients d'intercorrélation entre les signaux F1 et F2, pour des retards successifs distincts de pas de retard déterminé, est établie. Une comparaison des coefficients d'intercorrélation permet de discriminer le coefficient d'intercorrélation de valeur la plus grande, pour une valeur de retard spécifique, cette valeur de retard spécifique étant représentative de la mesure du décalage temporel, noté "Dt", entre le signal F1 et le signal F2.

A l'étape E40, le délai D3 représentatif du temps de traitement du signal de parole reçu dans le terminal de communication (1) considéré, est obtenu en effectuant la somme du décalage temporel "Dt" mesuré entre les signaux de parole F1 et F2, et du temps de décodage prédéterminé, "Tdéc", du décodeur témoin (123), c'est-à-dire : D3 = Dt + Tdéc.

Conformément à l'invention, la mesure du délai D3 du temps de traitement du signal de parole reçu dans le terminal est effectuée dans le cadre de l'évaluation du délai de transmission de bout en bout du signal de parole.

A cet effet, comme représenté à la figure 3, au cours des étapes E41 et E42, on évalue (E41) le délai "D1" de traitement à l'émission du signal de parole, et on mesure (E42) le délai "D2" de transmission du signal de parole dans le réseau.

Selon l'implémentation décrite ici, le délai "D1" de traitement à l'émission du signal de parole est évalué par consultation d'une table stockée en mémoire dans le terminal récepteur. Dans cette table sont enregistrées, par type de codeur à l'émission du signal de parole reçu, une valeur maximale et une valeur minimale prédéfinies du délai "D1", ces valeurs prédéfinies prenant en compte la charge utile (*payload*) des paquets IP reçus.

Le type de codeur à l'émission et la charge utile des paquets IP reçus, sont identifiées dans le terminal récepteur à partir de messages de signalisation d'appel contenus dans les paquets IP reçus. Dans le mode de réalisation décrit, les messages de signalisation sont des messages selon le protocole de signalisation d'appel H.225.0.

Le mode d'évaluation du délai "D1" exposé ici, est décrit dans le document intitulé "*Estimating E-model Id within a VoIP network, Technical note*", de la société Psytechnics, que l'on peut trouver à l'adresse Internet suivante : ' http://www.psytechnics.com/papers/Id_Emodel_technote_1.1.pdf'. La méthode décrite est dérivée de la recommandation G.114 de l'UIT-T : "SYSTEMES ET SUPPORTS DE TRANSMISSION, SYSTEMES ET RESEAUX NUMERIQUES - Temps de transmission dans un sens".

On notera ici que le type de codeur à l'émission (codec négocié) peut également être obtenu à partie des messages de négociation d'appel (H.245) extraits des paquets de données reçus dans le terminal. Ces messages de négociations d'appels sont extraits par le filtre réseau (105), à partir desquels des informations d'identification de la communication vocale sont obtenues, en particulier, les dates de début et de fin de communication, le codec (codeurdécodeur audio) négocié entre le terminal appelant et le terminal appelé, la charge utile (*payload*) des paquets IP reçus, les identifiants, par exemple les adresses IP, des terminaux appelant et appelé, le chemin reliant les deux terminaux au travers du réseau.

La table ci-dessous fournit une liste de délais d'encodage (D1) "meilleur cas" et "pire cas" (en anglais *best case* et *worst case*) pour trois des codecs VoIP les plus utilisés. Cette table est extraite du document de Psytechnics précité.

| **Codec** | **D1, meilleur cas (ms)** | **D1, pire cas (ms)** |
|---|---|---|
| G.711 | Taille_paquet | Taille paquet + 0,125 |
| G.729 | Taille_paquet + 5 | Taille_paquet + 5 + 10 |
| G.723.1 | Taille_paquet + 7,5 | 2 * Taille_paquet + 7,5 + 30 |

En pratique, dans la plupart des situations, le délai (D1) d'encodage à l'émission sera plus proche de la situation "meilleur cas" et par conséquent, une estimation raisonnable du délai d'encodage D1 consiste à choisir la valeur minimale ("meilleur cas") augmentée de 20 %.

Dans cette évaluation, le temps s'écoulant entre le moment où un paquet est prêt à la transmission, dans le terminal émetteur, et le moment où il apparaît sur la ligne de transmission, est insignifiant et par conséquent négligé.

Ainsi, la connaissance du type de codec à l'émission et la charge utile des paquets IP, permet d'estimer le temps de codage (temps de traitement à l'émission) à l'intérieur d'une plage de délais.

De retour à la figure 3, une fois le délai D1 d'encodage à l'émission calculé, ce dernier est fourni au module (133) chargé d'évaluer le délai de bout en bout, comme représenté à l'étape E43.

A l'étape E42, le délai "D2" de transmission du signal de parole dans le réseau est évalué. Selon un mode préféré de réalisation de l'invention, ce délai est évalué selon deux méthodes alternatives.

La première consiste à utiliser les paquets "*sender report*" (SR), en français "rapport d'émetteur", présents dans les paquets RTCP (contenus dans les trames UDP des paquets IP reçus). Le calcul du délai (D2) de transmission du terminal émetteur vers le terminal récepteur peut être facilement obtenu à partir des informations contenues dans les paquets SR. Pour obtenir plus de détails sur le mode de calcul de ce délai à partir des informations contenues dans les paquets SR, on pourra se reporter au document RFC1889 de l'IETF (*Internet Engineering Task Force)*, ce document étant disponible à l'adresse Internet suivante : ' http://www.ietf.org/rfc/rfc1889.txt '. On pourra y consulter notamment le point 6.3.2 associé à la figure 2 de ce document, intitulée "*Example for round-trip time computation*" (exemple de calcul de temps d'aller-retour).

Lorsque les paquets SR ne sont pas disponibles au cours de la communication, soit que le terminal émetteur ou l'application de téléphonie du terminal émetteur ne le permette pas, soit que la communication vocale est trop courte, ou pour toute autre raison provoquant l'absence de rapports d'émission dans les paquets reçus, une méthode alternative d'évaluation du délai (D2) de transmission sur le réseau est utilisée.

Selon un mode de réalisation préféré de l'invention, cette méthode alternative consiste à utiliser le programme utilitaire connu sous le nom "Ping". L'utilitaire Ping utilise la fonction Echo du protocole ICMP (*Internet Control Message Protocol*) qui est détaillée dans le document RFC792 de l'IETF et disponible à l'adresse Internet suivante : ' http://www.ietf.org/rfc/rfc792.txt'.

Dans le cadre de la présente invention, le terminal récepteur (1) envoie un petit paquet au travers du réseau vers l'adresse IP du terminal émetteur (3). Le terminal récepteur (1) attend alors un paquet de retour (écho) en provenance du terminal émetteur (3). Ensuite, en divisant par deux, le temps écoulé entre l'envoi du paquet "Ping" et la réception du paquet "écho", on obtient une évaluation moyenne du temps de transmission (D2) sur le réseau entre le terminal émetteur et le terminal récepteur.

De même que pour le délai D1, une fois le délai D2 de transmission sur le réseau, calculé, ce dernier est fourni au module (133) chargé d'évaluer le délai de bout en bout, à l'étape E43.

A l'étape E43, le délai de transmission de bout en bout "Dbb" est calculé à partir du délai "D1" de traitement (encodage) à l'émission, du délai "D2" de transmission dans le réseau, et du délai "D3" de traitement à la réception. En pratique, le délai de bout en bout est obtenu par sommation des valeurs calculées des délais D1, D2, D3.

Enfin, à l'étape E44, la valeur de délai de bout en bout calculée est mémorisée pour être éventuellement transmise à un serveur de collecte sur le réseau, comme exposé supra en liaison avec la figure 2. Si c'est le cas, les étapes suivantes (non représentées sur la figure 3) sont exécutées :
- création d'informations représentatives des valeurs de délai de bout en bout obtenues ;
- transmission des informations de délai de bout en bout à un serveur de collecte sur le réseau, le serveur étant destiné à assurer la gestion des informations de délai de bout en bout envoyées par un ensemble de terminaux de communication reliés au réseau.

En résumé, la présente invention concerne notamment un procédé d'évaluation du délai de traitement d'un signal de parole contenu dans des paquets de données reçus dans un terminal récepteur équipé d'un module de téléphonie, au cours d'une communication vocale établie au travers d'un réseau à commutation de paquets avec un terminal émetteur des paquets de données. L'invention concerne aussi un procédé d'évaluation du délai de transmission de bout en bout d'un signal de parole reçu dans un terminal récepteur, ce délai de bout en bout incluant le délai précité de traitement du signal de parole.

Dans le mode de réalisation décrit plus haut, les étapes de ces procédés sont déterminées par les instructions de programmes d'ordinateur, et sont mises en oeuvre lorsque ces programmes sont chargés dans un ordinateur ou plus généralement un système informatique, dont le fonctionnement est alors commandé par l'exécution de ces programmes.

En conséquence, l'invention s'applique également à des programmes d'ordinateur, particulièrement des programmes d'ordinateur sur ou dans un support d'informations, adaptés à mettre en oeuvre l'invention. Ces programmes peuvent utiliser n'importe quel langage de programmation, et être sous la forme de code source, code objet ou de code intermédiaire entre code source et code objet, tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM semi-conducteur, ou un moyen d'enregistrement magnétique, par exemple une disquette (*floppy disc*) ou un disque dur. D'autre part, un tel support peut être un support transmissible tel qu'un signal électrique ou optique, qui peut être acheminé via un câble électrique ou optique, ou encore par radio ou par d'autres moyens. En particulier un programme selon l'invention peut être téléchargé via l'Internet.

Alternativement, le support d'informations peut être un circuit intégré dans lequel le programme est incorporé, le circuit étant adapté pour exécuter ou pour être utilisé dans l'exécution du procédé en question.

L'invention concerne aussi un équipement terminal de communication vocale équipé d'un dispositif selon l'invention, tel qu'un téléphone IP ou un PC multimédia équipé d'un logiciel de téléphonie. L'invention concerne plus généralement tout équipement de terminaison IP équipé d'un dispositif d'évaluation de délai selon l'invention.

Bien entendu, la présente invention n'est nullement limitée aux modes de réalisation décrits et représentés ici, mais englobe, bien au contraire, toute variante à la portée de l'homme du métier.

## Revendications

1. Procédé d'évaluation du délai de traitement d'un signal de parole contenu dans des paquets de données reçus dans un terminal récepteur équipé d'un module de téléphonie apte à reconstituer un signal de parole à partir des paquets de données reçus, au cours d'une communication vocale établie au travers d'un réseau à commutation de paquets avec un terminal émetteur desdits paquets de données, ledit procédé étant **caractérisé en ce qu'**il comporte les étapes suivantes :
- obtention (E32) d'un flux de paquets audio à partir des paquets de données reçus, puis décodage (E34) dudit flux de paquets audio, selon un temps de décodage prédéterminé, pour reconstituer un premier signal de parole (F1) ;
- duplication (E36) d'au moins une partie du signal de parole reconstitué par le module de téléphonie, le signal de parole dupliqué constituant un second signal de parole (F2) ;
- détermination (E39) du décalage temporel existant entre les premier (F1) et second (F2) signaux de parole ;
- calcul (E40) du délai "D3" de traitement du signal de parole dans le terminal récepteur, à partir d'au moins le décalage temporel mesuré entre lesdits premier (F1) et second (F2) signaux de parole, et le temps de décodage prédéterminé.

2. Procédé selon la revendication 1, **caractérisé en ce que** le décalage temporel existant entre le premier (F1) et le second (F2) signal de parole est mesuré selon une méthode utilisant une fonction d'intercorrélation des signaux d'enveloppe desdits premier et second signaux.

3. Procédé selon la revendication 1 ou 2, **caractérisé en ce que** l'étape (E39) de détermination du décalage temporel est précédée d'une étape de détection (E38) d'activité vocale dans les premier et second signaux vocaux, les étapes qui suivent étant mises en oeuvre si l'activité vocale détectée dans les premier et second signaux est supérieure à un seuil prédéterminé.

4. Procédé selon l'une quelconque des revendications précédentes, **caractérisé en ce que** l'étape (E34) de décodage selon un temps de décodage prédéterminé met en oeuvre un algorithme de décodage identique à celui mis en oeuvre dans ledit module de téléphonie ou dont la différence de temps de décodage est constante et connue par rapport à l'algorithme mis en oeuvre dans le module de téléphonie.

5. Procédé selon l'une quelconque des revendications précédentes, **caractérisé en ce que** le temps de traitement "D3" est obtenue (E40) par sommation du décalage temporel déterminé entre les premier et second signaux de parole et du temps de décodage prédéterminé du premier signal de parole.

6. Procédé selon l'une quelconque des revendications précédentes, **caractérisé en ce que** ledit réseau à commutations de paquets est un réseau basé sur le protocole IP, les paquets de données reçus dans le terminal étant des paquets IP.

7. Procédé d'évaluation du délai de transmission de bout en bout d'un signal de parole reçu dans un terminal récepteur, au cours d'une communication vocale établie au travers d'un réseau à commutation de paquets avec un terminal émetteur dudit signal de parole, **caractérisé en ce qu'**il comporte une étape d'évaluation du délai "D3" de traitement du signal de parole dans le terminal récepteur, selon un procédé conforme à l'une quelconque des revendications 1 à 6.

8. Procédé selon la revendication 7, **caractérisé en ce qu'**il comporte en outre les étapes suivantes :
- évaluation (E41) du délai "D1" de traitement à l'émission du signal de parole ;
- mesure (E42) du délai "D2" de transmission du signal de parole dans le réseau ;
- évaluation (E43) du délai de transmission de bout en bout à partir dudit délai "D1" de traitement à l'émission, dudit délai "D2" de transmission, et dudit délai "D3" de traitement à la réception.

9. Procédé selon la revendication 8, **caractérisé en ce que** le délai "D1" de traitement à l'émission du signal de parole est évalué (E41) par consultation d'une table stockée dans le terminal récepteur dans laquelle sont enregistrées, par type de codeur à l'émission du signal de parole, une valeur maximale et une valeur minimale prédéfinies dudit délai "D1", lesdites valeurs prédéfinies prenant en compte la charge utile des paquets IP reçus.

10. Procédé selon la revendication 8 ou 9, **caractérisé en ce que** le délai "D2" de transmission du signal de parole dans le réseau est évalué (E42) selon une technique de type Ping.

11. Procédé selon la revendication 8 ou 9, **caractérisé en ce que** le délai "D2" de transmission du signal de parole dans le réseau est évalué à partir d'informations de type *Sender Report* extraites des paquets reçus.

12. Procédé selon l'une quelconque des revendications 7 à 11, **caractérisé en ce que** le délai de transmission de bout en bout à partir est évalué (E43) par sommation dudit délai "D1" de traitement à l'émission, dudit délai "D2" de transmission, et dudit délai "D3" de traitement à la réception.

13. Procédé selon l'une quelconque des revendications 7 à 12, **caractérisé en ce qu'**il comporte en outre les étapes de :
- création d'informations représentatives des valeurs de délai de bout en bout obtenues ;
- transmission desdites informations de délai de bout en bout à un serveur de collecte sur le réseau, ledit serveur étant destiné à assurer la gestion des informations de délai de bout en bout envoyées par un ensemble de terminaux de communication reliés au réseau.

14. Dispositif d'évaluation du délai de traitement d'un signal de parole contenu dans des paquets de données reçus dans un terminal récepteur équipé d'un module de téléphonie apte à reconstituer un signal de parole à partir des paquets de données reçus, au cours d'une communication vocale établie au travers d'un réseau à commutation de paquets avec un terminal émetteur desdits paquets de données, ledit dispositif étant **caractérisé en ce qu'**il comporte :
- un module (105) de filtrage réseau apte à obtenir, à partir des paquets de données reçus, un flux de paquets audio contenant le signal de parole ;
- un module (123) de décodage dit "témoin" ayant un temps de décodage prédéterminé, pour décoder le flux de paquets audio obtenu et reconstituer un premier signal de parole (F1) ;
- un module (111) de filtrage audio destiné à dupliquer au moins une partie du signal de parole reconstitué par le module de téléphonie, le signal de parole dupliqué constituant un second signal de parole (F2);
- des moyens (131) pour déterminer le décalage temporel existant entre les premier (F1) et second (F2) signaux de parole ;
- des moyens (131) pour calculer le délai "D3" de traitement du signal de parole dans le terminal récepteur, à partir d'au moins le décalage temporel mesuré entre lesdits premier (F1) et second (F2) signaux de parole, et le temps de décodage prédéterminé.

15. Dispositif selon la revendication 14, **caractérisé en ce qu'**il comporte en outre des moyens pour mettre en oeuvre un procédé d'évaluation du délai de traitement d'un signal de parole, tel que revendiqué dans l'une quelconque des revendications 2 à 6.

16. Dispositif d'évaluation du délai de transmission de bout en bout d'un signal de parole, à installer dans un terminal récepteur équipé d'un module de téléphonie, pour évaluer ledit délai de transmission à partir de paquets de données reçus dans le terminal récepteur au cours d'une communication vocale établie au travers d'un réseau à commutation de paquets avec un terminal émetteur desdits paquets de données, ledit dispositif étant **caractérisé en ce qu'**il comprend les moyens du dispositif de la revendication 14 pour mettre en oeuvre un procédé d'évaluation du délai de transmission de bout en bout tel que revendiqué dans l'une quelconque des revendications 7 à 13.

17. Equipement terminal de téléphonie sur réseau à commutation de paquets, notamment un téléphone IP ou un ordinateur personnel doté d'un logiciel de téléphonie, **caractérisé en ce qu'**il inclut un dispositif d'évaluation du délai de traitement d'un signal de parole tel que revendiqué dans la revendication 14 ou 15.

18. Equipement terminal de téléphonie sur réseau à commutation de paquets, notamment un téléphone IP ou un ordinateur personnel doté d'un logiciel de téléphonie, **caractérisé en ce qu'**il inclut un dispositif d'évaluation du délai de transmission de bout en bout d'un signal de parole tel que revendiqué dans la revendication 16.

19. Programme d'ordinateur sur un support d'informations, comportant des instructions de programme adaptées à la mise en oeuvre d'un procédé selon l'une quelconque des revendications 1 à 6, lorsque ledit programme est chargé et exécuté dans un système informatique.

20. Programme d'ordinateur sur un support d'informations de la revendication 19, comportant des instructions de programme adaptées à la mise en oeuvre d'un procédé selon l'une quelconque des revendications 7 à 13, lorsque ledit programme est chargé et exécuté dans un système informatique.

## Claims

1. Method for evaluating the processing lag of a speech signal contained in data packets received in a receiving terminal equipped with a telephone module able to reconstitute a speech signal from the data packets received, in the course of a voice communication established through a packet switching network with a terminal sending the said data packets, the said method being **characterized in that** it comprises the following steps:
- obtaining (E32) an audio packet stream on the basis of the data packets received, then decoding (E34) the said audio packet stream, according to a predetermined decoding time, so as to reconstitute a first speech signal (F1);
- duplicating (E36) at least part of the speech signal reconstituted by the telephone module, the duplicated speech signal constituting a second speech signal (F2);
- determining (E39) the time shift existing between the first (F1) and second (F2) speech signals;
- calculating (E40) the lag "D3" for processing the speech signal in the receiving terminal, on the basis of at least the measured time shift between the said first (F1) and second (F2) speech signals, and the predetermined decoding time.

2. Method according to Claim 1, **characterized in that** the time shift existing between the first (F1) and the second (F2) speech signal is measured according to a scheme using a cross-correlation function for the envelope signals of the said first and second signals.

3. Method according to Claim 1 or 2, **characterized in that** the step (E39) of determining the time shift is preceded by a step (E38) of detecting voice activity in the first and second voice signals, the steps which follow being implemented if the voice activity detected in the first and second signals is greater than a predetermined threshold.

4. Method according to any one of the preceding claims, **characterized in that** the step (E34) of decoding according to a predetermined decoding time implements a decoding algorithm identical to that implemented in the said telephone module or whose difference in decoding time is constant and known with respect to the algorithm implemented in the telephone module.

5. Method according to any one of the preceding claims, **characterized in that** the processing time "D3" is obtained (E40) by summing the determined time shift between the first and second speech signals and the predetermined decoding time of the first speech signal.

6. Method according to any one of the preceding claims, **characterized in that** the said packet switching network is a network based on the IP protocol, the data packets received in the terminal being IP packets.

7. Method for evaluating the end-to-end transmission lag of a speech signal received in a receiving terminal, in the course of a voice communication established through a packet switching network with a terminal sending the said speech signal, **characterized in that** it comprises a step of evaluating the lag "D3" for processing the speech signal in the receiving terminal, according to a method in accordance with any one of Claims 1 to 6.

8. Method according to Claim 7, **characterized in that** it furthermore comprises the following steps:
- evaluating (E41) the processing lag "D1" when sending the speech signal;
- measuring (E42) the transmission lag "D2" of the speech signal in the network;
- evaluating (E43) the end-to-end transmission lag on the basis of the said processing lag "D1" when sending, of the said transmission lag "D2", and of the said processing lag "D3" when receiving.

9. Method according to Claim 8, **characterized in that** the processing lag "D1" when sending the speech signal is evaluated (E41) by consulting a table stored in the receiving terminal and in which are recorded, by type of coder when sending the speech signal, a predefined maximum value and a predefined minimum value of the said lag "D1", the said predefined values taking into account the payload of the IP packets received.

10. Method according to Claim 8 or 9, **characterized in that** the transmission lag "D2" of the speech signal in the network is evaluated (E42) according to a technique of Ping type.

11. Method according to Claim 8 or 9, **characterized in that** the transmission lag "D2" of the speech signal in the network is evaluated on the basis of information of *Sender Report* type extracted from the packets received.

12. Method according to any one of Claims 7 to 11, **characterized in that** the end-to-end transmission lag is evaluated (E43) by summing the said processing lag "D1" when sending, the said transmission lag "D2", and the said processing lag "D3" when receiving.

13. Method according to any one of Claims 7 to 12, **characterized in that** it furthermore comprises the steps of:
- creating information representative of the end-to-end lag values obtained;
- transmitting the said end-to-end lag information to a collection server on the network, the said server being intended to ensure the management of the end-to-end lag information dispatched by a set of communication terminals linked to the network.

14. Device for evaluating the processing lag of a speech signal contained in data packets received in a receiving terminal equipped with a telephone module able to reconstitute a speech signal from the data packets received, in the course of a voice communication established through a packet switching network with a terminal sending the said data packets, the said device being **characterized in that** it comprises:
- a network filtering module (105) able to obtain, on the basis of the data packets received, an audio packet stream containing the speech signal;
- a so-called "telltale" decoding module (123) having a predetermined decoding time, for decoding the audio packet stream obtained and reconstituting a first speech signal (F1);
- an audio filtering module (111) intended to duplicate at least part of the speech signal reconstituted by the telephone module, the duplicated speech signal constituting a second speech signal (F2);
- means (131) for determining the time shift existing between the first (F1) and second (F2) speech signals;
- means (131) for calculating the lag "D3" for processing the speech signal in the receiving terminal, on the basis of at least the measured time shift between the said first (F1) and second (F2) speech signals, and the predetermined decoding time.

15. Device according to Claim 14, **characterized in that** it furthermore comprises means for implementing a method for evaluating the processing lag of a speech signal, as claimed in any one of Claims 2 to 6.

16. Device for evaluating the end-to-end transmission lag of a speech signal, to be installed in a receiving terminal equipped with a telephone module, for evaluating the said transmission lag on the basis of data packets received in the receiving terminal in the course of a voice communication established through a packet switching network with a terminal sending the said data packets, the said device being **characterized in that** it comprises the means of the device of Claim 14 for implementing a method for evaluating the end-to-end transmission lag as claimed in any one of Claims 7 to 13.

17. Telephone terminal equipment based on a packet switching network, notably an IP telephone or a personal computer furnished with telephone software, **characterized in that** it includes a device for evaluating the processing lag of a speech signal as claimed in Claim 14 or 15.

18. Telephone terminal equipment based on a packet switching network, notably an IP telephone or a personal computer furnished with telephone software, **characterized in that** it includes a device for evaluating the end-to-end transmission lag of a speech signal as claimed in Claim 16.

19. Computer program on an information medium, comprising program instructions suitable for implementing a method according to any one of Claims 1 to 6, when the said program is loaded and executed in a computer system.

20. Computer program on an information medium of Claim 19, comprising program instructions suitable for implementing a method according to any one of Claims 7 to 13, when the said program is loaded and executed in a computer system.

## Patentansprüche

1. Verfahren zur Auswertung der Verarbeitungszeit eines in Datenpaketen enthaltenen Sprachsignals, die in einem Empfänger-Endgerät empfangen werden, das mit einem Telefonie-Modul ausgestattet ist, der fähig ist, ein Sprachsignal ausgehend von den empfangenen Datenpaketen wiederherzustellen, während einer Sprachverbindung, die über ein Paketvermittlungsnetz mit einem Sender-Endgerät der Datenpakete aufgebaut wird, wobei das Verfahren **dadurch gekennzeichnet ist, dass** es die folgenden Schritte aufweist:
- Erhalt (E32) eines Stroms von Audiopaketen ausgehend von den empfangenen Datenpaketen, dann Decodieren (E34) des Stroms von Audiopaketen gemäß einer vorbestimmten Decodierzeit, um ein erstes Sprachsignal wiederherzustellen (F1);
- Duplizieren (E36) mindestens eines Teils des vom Telefonie-Modul wiederhergestellten Sprachsignals, wobei das duplizierte Sprachsignal ein zweites Sprachsignal (F2) bildet;
- Bestimmen (E39) der vorhandenen Zeitverschiebung zwischen dem ersten (F1) und dem zweiten Sprachsignal (F2);
- Berechnen (E40) der Verarbeitungszeit "D3" des Sprachsignals in dem Empfänger-Endgerät ausgehend von mindestens der Zeitverschiebung, die zwischen dem ersten (F1) und dem zweiten Sprachsignal (F2) gemessen wird, und der vorbestimmten Decodierzeit.

2. Verfahren nach Anspruch 1, **dadurch gekennzeichnet, dass** die bestehende Zeitverschiebung zwischen dem ersten (F1) und dem zweiten Sprachsignal (F2) gemäß einer Methode gemessen wird, die eine Interkorrelationsfunktion der Hüllkurvensignale des ersten und des zweiten Signals verwendet.

3. Verfahren nach Anspruch 1 oder 2, **dadurch gekennzeichnet, dass** vor dem Schritt (E39) des Bestimmens der Zeitverschiebung ein Schritt der Erfassung (E38) einer Sprachaktivität im ersten und im zweiten Sprachsignal liegt, wobei die folgenden Schritte angewendet werden, wenn die im ersten und im zweiten Signal erfasste Sprachaktivität über einem vorbestimmten Pegel liegt.

4. Verfahren nach einem der vorhergehenden Ansprüche, **dadurch gekennzeichnet, dass** der Schritt (E34) des Decodierens gemäß einer vorbestimmten Decodierzeit einen Decodieralgorithmus gleich demjenigen anwendet, der im Telefonie-Modul angewendet wird, oder dessen Decodierzeitdifferenz bezüglich des im Telefonie-Modul angewendeten Algorithmus konstant und bekannt ist.

5. Verfahren nach einem der vorhergehenden Ansprüche, **dadurch gekennzeichnet, dass** die Verarbeitungszeit "D3" (E40) durch Summieren der bestimmten Zeitverschiebung zwischen dem ersten und dem zweiten Sprachsignal und der vorbestimmten Decodierzeit des ersten Sprachsignals erhalten wird.

6. Verfahren nach einem der vorhergehenden Ansprüche,
**dadurch gekennzeichnet, dass** das Paketvermittlungsnetz ein auf dem IP-Protokoll basierendes Netz ist, wobei die im Endgerät empfangenen Pakete IP-Pakete sind.

7. Verfahren zur Auswertung der Übertragungszeit von Endgerät zu Endgerät eines in einem Empfänger-Endgerät empfangenen Sprachsignals während einer Sprachverbindung, die über ein Paketvermittlungsnetz mit einem Sender-Endgerät des Sprachsignals aufgebaut wird, **dadurch gekennzeichnet, dass** es einen Schritt der Auswertung der Verarbeitungszeit "D3" des Sprachsignals im Empfänger-Endgerät gemäß einem Verfahren nach einem der Ansprüche 1 bis 6 aufweist.

8. Verfahren nach Anspruch 7, **dadurch gekennzeichnet, dass** es außerdem die folgenden Schritte aufweist:
- Auswerten (E41) der Verarbeitungszeit "D1" beim Senden des Sprachsignals;
- Messen (E42) der Übertragungszeit "D2" des Sprachsignals in das Netz;
- Auswerten (E43) der Übertragungszeit von Endgerät zu Endgerät ausgehend von der Verarbeitungszeit "D1" beim Senden, der Übertragungszeit "D2" und der Verarbeitungszeit "D3" beim Empfang.

9. Verfahren nach Anspruch 8, **dadurch gekennzeichnet, dass** die Verarbeitungszeit "D1" beim Senden des Sprachsignals durch Abfragen einer im Empfänger-Endgerät gespeicherten Tabelle ausgewertet wird (E41), in der pro Codierertyp beim Senden des Sprachsignals ein vordefinierter maximaler Wert und minimaler Wert der Zeit "D1" gespeichert sind, wobei die vordefinierten Werte die Nutzlast der empfangenen IP-Pakete berücksichtigen.

10. Verfahren nach Anspruch 8 oder 9, **dadurch gekennzeichnet, dass** die Übertragungszeit "D2" des Sprachsignals in das Netz gemäß einer Technik vom Typ Ping ausgewertet wird (E42).

11. Verfahren nach Anspruch 8 oder 9, **dadurch gekennzeichnet, dass** die Übertragungszeit "D2" des Sprachsignals in das Netz ausgehend von Informationen vom Typ Sender Report ausgewertet wird, die aus den empfangenen Paketen extrahiert werden.

12. Verfahren nach einem der Ansprüche 7 bis 11, **dadurch gekennzeichnet, dass** die Übertragungszeit von Endgerät zu Endgerät durch Summieren der Verarbeitungszeit "D1" beim Senden, der Übertragungszeit "D2" und der Verarbeitungszeit "D3" beim Empfang ausgewertet wird (E43).

13. Verfahren nach einem der Ansprüche 7 bis 12, **dadurch gekennzeichnet, dass** es außerdem die folgenden Schritte aufweist:
- Erzeugen von Informationen, die für die erhaltenen Zeitwerte von Endgerät zu Endgerät repräsentativ sind;
- Übertragen der Zeitinformationen von Endgerät zu Endgerät an einen Sammelserver im Netz, wobei der Server dazu bestimmt ist, die Verwaltung der Zeitinformationen von Endgerät zu Endgerät zu gewährleisten, die von einer Gruppe von mit dem Netz verbundenen Kommunikationsendgeräten geschickt werden.

14. Vorrichtung zur Auswertung der Verarbeitungszeit eines in Datenpaketen enthaltenen Sprachsignals, die in einem Empfänger-Endgerät empfangen werden, das mit einem Telefonie-Modul ausgestattet ist, der fähig ist, ein Sprachsignal ausgehend von den empfangenen Datenpaketen wiederherzustellen, während einer Sprachverbindung, die über ein Paketvermittlungsnetz mit einem Sender-Endgerät der Datenpakete aufgebaut wird, wobei die Vorrichtung **dadurch gekennzeichnet ist, dass** sie aufweist:
- einen Modul (105) der Netzfilterung, der fähig ist, ausgehend von den empfangenen Datenpaketen einen Strom von Audiopaketen zu erhalten, die das Sprachsignal enthalten;
- einen Decodiermodul (123), "Bezug" ("témoin") genannt, der eine vorbestimmte Decodierzeit hat, um den erhaltenen Strom von Audiopaketen zu decodieren und ein erstes Sprachsignal wiederherzustellen (F1);
- einen Modul (111) der Audiofilterung, der dazu bestimmt ist, mindestens einen Teil des vom Telefonie-Modul wiederhergestellten Sprachsignals zu duplizieren, wobei das duplizierte Sprachsignal ein zweites Sprachsignal bildet (F2);
- Mittel (131), um die Zeitverschiebung zu bestimmen, die zwischen dem ersten (F1) und dem zweiten Sprachsignal (F2) besteht;
- Mittel (131), um die Verarbeitungszeit "D3" des Sprachsignals im Empfänger-Endgerät ausgehend von mindestens der zwischen dem ersten (F1) und dem zweiten Sprachsignal (F2) gemessenen Zeitverschiebung und der vorbestimmten Decodierzeit zu berechnen.

15. Vorrichtung nach Anspruch 14, **dadurch gekennzeichnet, dass** sie außerdem Mittel aufweist, um ein Verfahren zur Auswertung der Verarbeitungszeit eines Sprachsignals anzuwenden, wie es in einem der Ansprüche 2 bis 6 beansprucht wird.

16. Vorrichtung zur Auswertung der Übertragungszeit eines Sprachsignals von Endgerät zu Endgerät, die in ein Empfänger-Endgerät einzubauen ist, das mit einem Telefonie-Modul ausgestattet ist, um die Übertragungszeit ausgehend von Datenpaketen auszuwerten, die im Empfänger-Endgerät empfangen werden, während einer Sprachverbindung, die über ein Paketvermittlungsnetz mit einem Sender-Endgerät der Datenpakete aufgebaut wird, wobei die Vorrichtung **dadurch gekennzeichnet ist, dass** sie die Mittel der Vorrichtung des Anspruchs 14 aufweist, um ein Verfahren zur Auswertung der Übertragungszeit von Endgerät zu Endgerät anzuwenden, wie es in einem der Ansprüche 7 bis 13 beansprucht wird.

17. Telefonie-Endgeräteinrichtung in einem Paketvermittlungsnetz, insbesondere ein IP-Telefon oder ein PC, der mit einer Telefonie-Software ausgestattet ist, **dadurch gekennzeichnet, dass** sie eine Vorrichtung zur Auswertung der Verarbeitungszeit eines Sprachsignals enthält, wie sie im Anspruch 14 oder 15 beansprucht wird.

18. Telefonie-Endgeräteinrichtung in einem Paketvermittlungsnetz, insbesondere ein IP-Telefon oder ein PC, der mit einer Telefonie-Software ausgestattet ist, **dadurch gekennzeichnet, dass** sie eine Vorrichtung zur Auswertung der Übertragungszeit eines Sprachsignals von Endgerät zu Endgerät enthält, wie sie in Anspruch 16 beansprucht ist.

19. Computerprogramm auf einem Datenträger, das Programmanweisungen enthält, die für die Anwendung eines Verfahrens nach einem der Ansprüche 1 bis 6 geeignet sind, wenn das Programm in ein informationsverarbeitendes System geladen und dort ausgeführt wird.

20. Computerprogramm auf einem Datenträger des Anspruchs 19, das Programmanweisungen enthält, die für die Anwendung eines Verfahrens nach einem der Ansprüche 7 bis 13 geeignet sind, wenn das Programm in ein informationsverarbeitendes System geladen und dort ausgeführt wird.
